(19) Europäisches Patentamt
European Patent Office
Office européen des brevets

(11) **EP 3 581 982 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **19179309.0**

(22) Anmeldetag: **11.06.2019**

(51) Internationale Patentklassifikation (IPC):
**G02B 21/00** (2006.01)   **G02B 21/36** (2006.01)
**G01N 21/64** (2006.01)   **G02B 21/16** (2006.01)
**G02B 27/58** (2006.01)

(52) Gemeinsame Patentklassifikation (CPC):
**G02B 21/367; G01N 21/6458; G02B 21/0076;**
G02B 21/16; G02B 27/58

(54) **BILDBEARBEITUNGSVORRICHTUNG UND VERFAHREN ZUR BILDVERARBEITUNG, INSBESONDERE FÜR EIN SUPERAUFLÖSENDES MIKROSKOP**

IMAGE PROCESSING APPARATUS AND IMAGE PROCESSING METHOD, IN PARTICULAR FOR A SUPER HIGH RESOLUTION MICROSCOPE

DISPOSITIF DE TRAITEMENT DES IMAGES ET PROCÉDÉ DE TRAITEMENT DES IMAGES, EN PARTICULIER POUR UN MICROSCOPE TRÈS HAUTE RÉSOLUTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2018 DE 102018114090**

(43) Veröffentlichungstag der Anmeldung:
**18.12.2019 Patentblatt 2019/51**

(73) Patentinhaber: **Surface Concept GmbH**
**55124 Mainz (DE)**

(72) Erfinder:
• **Valdaitsev, Dmitry**
**55118 Mainz (DE)**
• **Oelsner, Andreas**
**65203 Wiesbaden (DE)**

(74) Vertreter: **Blumbach · Zinngrebe Patentanwälte PartG mbB**
**Alexandrastraße 5**
**65187 Wiesbaden (DE)**

(56) Entgegenhaltungen:
**EP-A1- 2 752 699    WO-A1-2018/091704**

• **ALEX SMALL ET AL: "Fluorophore localization algorithms for super-resolution microscopy", NATURE METHODS, Bd. 11, Nr. 3, 27. Februar 2014 (2014-02-27), Seiten 267-279, XP055274731, New York ISSN: 1548-7091, DOI: 10.1038/nmeth.2844**
• **JOHANN G. DANZL ET AL: "Coordinate-targeted fluorescence nanoscopy with multiple off states", NATURE PHOTONICS, Bd. 10, Nr. 2, 18. Januar 2016 (2016-01-18), Seiten 122-128, XP055245904, UK ISSN: 1749-4885, DOI: 10.1038/nphoton.2015.266**

**Beschreibung**

Die Erfindung betrifft allgemein Verfahren und Vorrichtungen zur Bildverarbeitung. Die Erfindung betrifft im Speziellen eine Bildverarbeitungsvorrichtung gemäß Anspruch 1 und ein mit der Vorrichtung durchführbares Bildverarbeitungsverfahren gemäß Anspruch 12, um aus Bilddaten Koordinaten von Helligkeitsmaxima zu extrahieren. Die Erfindung ist insbesondere für die Verarbeitung von Bilddaten eines superauflösenden Lokalisationsmikroskops geeignet.

Unter superauflösender Mikroskopie versteht der Fachmann im Allgemeinen lichtmikroskopische Verfahren und Vorrichtungen, welche Bildinformationen mit Auflösungen unterhalb des Abbeschen Beugungslimits liefern. Es sind eine Reihe von verschiedenen Prinzipien für superauflösende Mikroskopie bekannt, die unter anderem darauf basieren, hinreichend räumlich isolierte Lichtemitter zu erfassen, deren Größe deutlich unter dem Beugungslimit des optischen Systems liegt. Auf diese Weise können die Lichtemitter der zu untersuchenden Probe mit einer höheren Genauigkeit lokalisiert werden, als diese das optische System an sich gestattet.

Verfahren des Prinzips der Lokalisationsmikroskopie werden als STORM, dSTORM, PALM und SPDM (Spektrale Präzisions-Distanz-Mikroskopie) bezeichnet. Bei diesen Verfahren wird die Fluoreszenz selektiv angeregter oder abstrahlender, hinreichend weit entfernter Emitter ausgewertet. Die Emitter lassen sich räumlich genau lokalisieren, da sich das Maximum des durch die Punktspreizfunktion des Mikroskops aufgeweiteten optischen Signals immer noch genau bestimmen lässt.

Die WO 2018/091704 A1 betrifft ein Verfahren zum Ermitteln einer Fluoreszenzintensität, wobei mehrere zweidimensionale Einzelbilder einer Probe mittels eines Mikroskops aufgenommen werden, wobei in jedem der Einzelbilder derselbe Probenbereich enthalten ist und während der Aufnahme der Einzelbilder unterschiedliche Emitter zur Emission von Fluoreszenz angeregt werden, so dass in mindestens einem der Einzelbilder mindestens eine beugungsbegrenzte Intensitätsverteilung einer Fluoreszenzemission eines Emitters vereinzelt ist, und das Einzelbild mit der vereinzelten Intensitätsverteilung ermittelt und deren Gesamtintensität ermittelt wird.

Die EP 2 752 699 A1 betrifft ein Verfahren zur hochauflösenden 3D-Lokalisierungsmikroskopie einer Fluoreszenzemitter enthaltenden Probe, bei dem die Fluoreszenzemitter in der Probe zur Abgabe von Fluoreszenzstrahlung angeregt werden und die Probe mit einer Ortsauflösung im Weitfeld abgebildet wird, die Anregung so bewirkt wird, dass bezogen auf die Ortsauflösung mindestens einige Fluoreszenzemitter isoliert sind, und in einer Lokalisierungsanalyse eine dreidimensionale Ortsangabe, die in Tiefenrichtung der Abbildung eine z-Koordinate und orthogonal dazu eine x- und eine y-Koordinate umfasst, für jeden isolierten Fluoreszenzemitter mit einer Genauigkeit bestimmt wird, die über die Ortsauflösung hinausgeht , wobei eine Lokalisierungsunsicherheitstabelle bereitgestellt wird, die eine Unsicherheit der Ortsangabe, und zwar zumindest hinsichtlich deren z-Koordinate als Funktion der z-Koordinate und einer Anzahl von Photonen, die bei der Abbildung im Weitfeld aufgesammelt wurden, angibt und für jeden lokalisierten Fluoreszenzemitter unter Zugriff auf die Lokalisierungsunsicherheitstabelle eine Ortsangabenunsicherheit für die in der Lokalisierungsanalyse bestimmte Ortsangabe ermittelt wird.

Alex Small et al. "Fluorophore localization algorithms for super-resolution microscopy", Nature Methods, Bd. 11, Nr. 3, 27. Februar 2014, Seiten 267-279, behandelt grundlegende Probleme für Einzelfluorophor-Anpassungsroutinen, Lokalisierungsalgorithmen basierend auf anderen Prinzipien als Anpassung, dreidimensionale Bildgebung, Dipolbildgebung und Techniken zum Schätzen von Fluorophorpositionen aus Bildern von mehreren aktivierten Fluorophore.

Johann G. Danzl et al. "Coordinate-targeted fluorescence nanoscopy with multiple off states", Nature Photonics, Bd. 10, Nr. 2, 18. Januar 2016, Seiten 122-128 behandelt, dass Fluorophore in einen zweiten ausgeschalteten Zustand versetzt werden, der gegenüber dem überschüssigen Licht inert ist. Durch Verwendung von reversibel schaltbarem Leuchtstoff bei Proteinen als Markierungen reduziert der Ansatz das Bleichen und verbessert die Auflösung und den Kontrast in der STED-Mikroskopie mit lebenden Zellen.

Auch wenn die verschiedenen superauflösenden Mikroskopieverfahren mittlerweile sehr hohe Ortsauflösungen erreichen, ist ihr praktischer Nutzen, etwa in der Medizin für histologische Untersuchungen noch sehr begrenzt.

Die derzeitige Realisierung der superauflösenden Lokalisationsmikroskopie bringt die Übertragung sehr großer Datenmengen von der Kamera zum Auswerterechner mit sich. Diese betragen bis über 100 Gigabyte für Daten, die zur Rekonstruktion eines einzigen superaufgelösten Bildes benötigt werden. Auch wenn eine Vorverarbeitung der Daten mit der Festlegung von auszuwertenden Bildausschnitten (sogenannte "Regions of Interest", ROI) erfolgt, ergeben sich noch sehr hohe Datenmengen von mehreren 100 Megabyte pro Bild. Diese Daten müssen sowohl gespeichert als auch prozessiert werden. Häufig kann erst nach Abschluss eines Experimentes entschieden werden, ob dieses Vorgehen erfolgreich war. Bei der Aufnahme der Daten wird jedoch in der Regel aufgrund der lokalisierten Fluoreszenzsignale und der Struktur der Probe nur ein rein stochastisch verteilter Anteil von unter 10% der auf der Kamera vorhandenen Pixel genutzt. Aus diesem Grund ist der überwiegende Teil der übertragenen und gespeicherten Daten ohne Informationsgehalt, führt aber zur Belegung großer Speicherkapazitäten und nimmt einen großen Teil der Rechnerkapazität bei Transfer und Bearbeitung in Anspruch. Hierbei ist nicht nur der Speicherbedarf ein Problem. Vielmehr verhindern die großen Datenmengen eine schnelle Bearbeitung der Daten einschließlich deren Darstellungen. Dies führt dazu, dass bei der superauflösenden Lokalisationsmikroskopie ein Bild der Probe erst nach längerer Zeit zur Verfügung steht.

Der Erfindung liegt daher allgemein die Aufgabe zugrunde, die Auswertung der Bilddaten zu beschleunigen. Diese Aufgabe wird durch den Gegenstand der unabhängigen Ansprüche gelöst. Vorteilhafte Ausgestaltungen und Weiterbildungen der Erfindung sind in den abhängigen Ansprüchen angegeben.

Demgemäß sieht die Erfindung nach Anspruch 1 eine Bildverarbeitungsvorrichtung für die Bilddaten eines superauflösenden Mikroskops vor, welche eine Recheneinrichtung zur Verarbeitung der von einem optoelektronischen Sensor ausgelesenen Bilddaten aufweist, die eingerichtet ist, Koordinaten der Maxima von Helligkeitsverteilungen in den Bilddaten mit einer Genauigkeit zu bestimmen, die höher als der Pixelabstand ist, wobei die Recheneinrichtung eingerichtet ist, die Koordinaten eines Helligkeitsmaximas zu bestimmen, indem diese Differenzen von Helligkeitswerten benachbarter Pixel bildet und diese Differenzen in geordneter Reihenfolge entsprechend der räumlichen Abfolge der Pixel zu einer Adresse verkettet, wobei die Recheneinrichtung weiterhin einen Speicher mit einer darin abgelegten Tabelle mit Koordinatenwerten aufweist, wobei die Recheneinrichtung eingerichtet ist, einen Koordinatenwert aus der Tabelle anhand der durch die verketteten

Differenzwerte bestimmten Adresse auszulesen.

Mit anderen Worten bilden die verketteten oder verknüpften Differenzen eine Adresse, wobei die Tabelle die Adressen bestimmten Koordinaten zuordnet. Diese Zuordnung kann anhand eines geeigneten Modells errechnet werden. So führt beispielsweise eine Gauss-förmige Helligkeitsverteilung in einem Maximum zu einem bestimmten Muster von Differenzen, das anders ist, als etwa bei einer Lorenz-förmigen Verteilung. Die Tabelle kann im Vorhinein berechnet und abgespeichert werden. Damit werden die besonders aufwändigen Berechnungen vor der Messung durchgeführt. Die ansonsten anfallende Bestimmung der Koordinaten der Helligkeitsmaxima durch Anpassung des jeweiligen Modells der Helligkeitsverteilung wird durch sehr einfache Rechenoperationen, nämlich die Differenzbildung, die Verkettung der Differenzwerte zu Adressen und das Auslesen der Koordinaten an der durch die Adressen bestimmten Position der Tabelle, beziehungsweise der Speicherposition, ersetzt.

Im Allgemeinen ist es sinnvoll, eine solche Bestimmung für zwei unterschiedliche Raumrichtungen, also etwa x- und y-Richtung durchzuführen. Dementsprechend wird dazu eine zweidimensionale Tabelle gespeichert. In bevorzugter Ausgestaltung der Erfindung enthält der Speicher also eine zweidimensionale Tabelle, wobei die Bildverarbeitungsvorrichtung dazu eingerichtet ist, Differenzen von Helligkeitswerten entlang zweier unterschiedlicher Richtungen zu bilden, für jede Richtung die Differenzen zu einer Adresse zu verketten und aus der Tabelle die Koordinaten der Raumrichtungen an der durch die beiden Adressen bestimmten Position auszulesen.

Die Erfindung eignet sich allgemein dazu, aus Bilddaten, die aufgrund einer Beugungsbegrenzung oder allgemein optischen Abberationen eine Unschärfe aufweisen, die Position punktförmiger Helligkeitsmaxima exakt zu bestimmen. Mit besonderem Vorteil kann dies wie gesagt bei der Verarbeitung von Bilddaten von superauflösenden Lokalisationsmikroskopen verwendet werden. Gemäß einem Aspekt sieht die Erfindung daher auch ein superauflösendes Mikroskop vor, welches

- eine Anregungsquelle zur Anregung von Fluoreszenzlicht in einer mit dem Mikroskop zu untersuchenden und vor einem Objektiv des Mikroskops angeordneten Probe,
- eine Kamera mit einem optoelektronischen Sensor zur Aufzeichnung des mikroskopischen Bilds des durch Fluoreszenzanregung von der Probe emittierten Lichts, und eine erfindungsgemäße Bildverarbeitungsvorrichtung umfasst, welche mit dem Sensor verbunden ist, um aus dem Sensor ausgelesene Bilddaten zu verarbeiten und die Koordinaten von Helligkeitsmaxima zu bestimmen.

Die Bildverarbeitungsvorrichtung gemäß der Erfindung kann zumindest teilweise in einem Mikrocontroller implementiert sein. Dies ist möglich, da die Erfindung die Bildverarbeitung zur Umrechnung der Bilddaten in Daten, die die Koordinaten von Helligkeitsmaxima in Superauflösung enthalten, mit sehr einfachen Berechnungen durchführt. Demgemäß ist in einer Weiterbildung der Erfindung vorgesehen, dass die Bildverarbeitungsvorrichtung eine Auswerteelektronik mit zumindest einem Mikrocontroller umfasst, welcher eingerichtet ist, zumindest die Berechnung der Differenzen von Helligkeitswerten benachbarter Pixel durchzuführen.

Um die Menge an zu übertragenden Daten zu reduzieren, ist in besonders bevorzugter Weiterbildung der Erfindung vorgesehen, dass die Auswerteelektronik in einer Kamera integriert ist. Auf diese Weise kann der Datenstrom von der Kamera zu einem Rechner für die weitere Bearbeitung der Daten erheblich reduziert werden. Gemäß dieser Ausführungsform der Erfindung ist also vorgesehen, dass die Bildverarbeitungsvorrichtung neben der Auswerteelektronik einen Rechner umfasst und die Auswerteelektronik in einer Kamera integriert ist, die an den Rechner zur Übertragung der Daten der Auswerteelektronik angeschlossen ist.

Das mit einer erfindungsgemäßen Bildverarbeitungsvorrichtung nach Anspruch 12 durchgeführte Verfahren zur Bildverarbeitung, für die Bilddaten eines superauflösenden Mikroskops basiert darauf, dass von mindestens einem optoelektronischen Sensor Bilddaten ausgelesen werden und mit einer Recheneinrichtung zur Verarbeitung der Bilddaten Koordinaten der Maxima von Helligkeitsverteilungen in den Bilddaten mit einer Genauigkeit bestimmt werden, die höher als der Pixelabstand ist, wobei die Recheneinrichtung die Koordinaten eines Helligkeitsmaximas bestimmt, indem diese Differenzen von Helligkeitswerten benachbarter Pixel bildet und diese Differenzen in geordneter Reihenfolge entsprechend der räumlichen Abfolge der Pixel zu einer Adresse verkettet, wobei die Recheneinrichtung weiterhin in einem Speicher eine Tabelle mit Koordinatenwerten speichert und einen Koordinatenwert aus der Tabelle anhand der durch die verketteten Differenzwerte bestimmten Adresse ausliest.

Gemäß noch einem Aspekt der Erfindung sind eine Kamera, sowie eine bildverarbeitende Vorrichtung mit einer Kamera und einem an die Kamera angeschlossenen Rechner für ein superauflösendes Mikroskop vorgesehen, welche mit entsprechenden Mitteln zur Ausführung des erfindungsgemäßen Verfahrens, beziehungsweise mit einer Auswerteelektronik zum Einsatz in einem superauflösenden Mikroskop gemäß der Erfindung ausgestattet sind.

Die Kamera eines superauflösenden Mikroskops gemäß dieser Ausführungsform der Erfindung ist also eingerichtet, die Bilddaten bereits so auszuwerten, dass die ausgewerteten Daten die in hoher Auflösung lokalisierten Orte der Fluoreszenzemitter der untersuchten Probe enthalten. Die so erzeugten Daten enthalten damit die wesentliche Bildinformation in komprimierter Form. Durch die interne Auswertung in der Kamera mit dem Mikrocontroller kann eine hohe Rechengeschwindigkeit erreicht werden, welche die Ermittlung der Fluoreszenzemitter in Superauflösung bereits im laufenden Betrieb ermöglicht.

Die Erfindung wird nachfolgend genauer und unter Bezugnahme auf die beigeschlossenen Figuren erläutert.

Kurzbeschreibung der Zeichnungen

Die Erfindung wird nachfolgend genauer anhand der beigeschlossenen Zeichnungen erläutert. Dabei verweisen gleiche Bezugszeichen in den Zeichnungen auf jeweils gleiche oder entsprechende Elemente. Es zeigen:

Fig. 1            einen schematischen Aufbau eines superauflösenden Lichtmikroskops mit einer Bildverarbeitungsvorrichtung gemäß der Erfindung,

Fig. 2            eine Weiterbildung eines superauflösenden Lichtmikroskops mit einer Zylinderlinse,

Fig. 3 und Fig. 4    Ausschnitte aus einer Matrix von Helligkeitswerten.

Fig. 5            Eine Matrix von Helligkeitswerten mit zwei Reihen von Pixeln zur Bestimmung von Ortskoordinaten von Fluoreszenzereignissen,

Fig. 6            eine durch die Helligkeitswerte der Pixel einer Reihe repräsentierte Helligkeitsverteilung,

Fig. 7            ein Pixel mit einem Ort eines Fluoreszenzereignisses,

Fig. 8            ein Pixel mit einem Sub-Binning,

Fig. 9            zwei Helligkeitsverteilungen,

Fig. 10           eine Weiterbildung eines Lichtmikroskops.

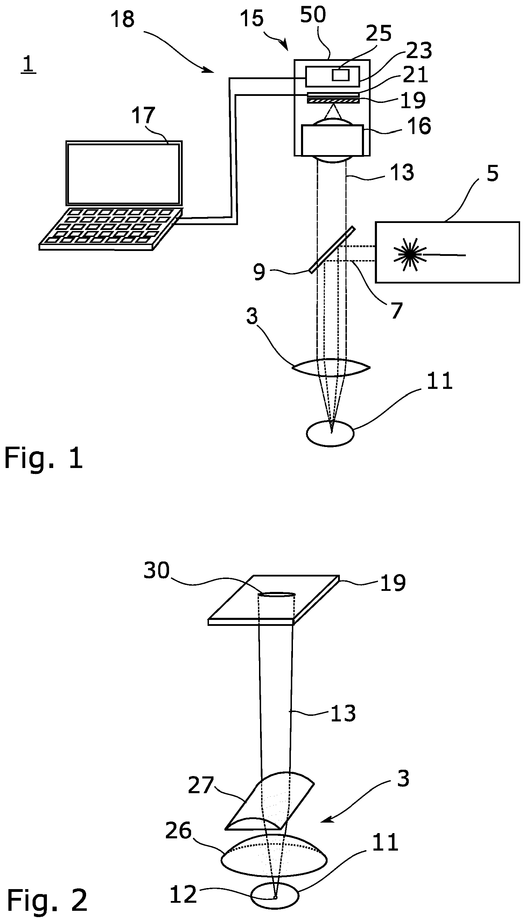

In Fig. 1 ist eine Ausführunasform eines superauflösenden Lichtmikroskops 1 mit einer erfindungsgemäßen Bildverarbeitungsvorrichtung nach Anspruch 1 in schematischer Darstellung gezeigt. Für die Erfindung ist dabei insbesondere ein nach dem Prinzip der Lokalisationsmikroskopie arbeitendes Mikroskop vorgesehen. Als Anregungsquelle zur Anregung einer Fluoreszenz ist allgemein, wie auch im dargestellten Beispiel ein Laser 5 geeignet. Denkbar ist generell auch, mehrere Laser oder Laserstrahlen zu verwenden, etwa um gleichzeitig oder auch in sequentieller Abfolge Licht verschiedener Wellenlängen auf die Probe 11 einzustrahlen. Die Probe 11 ist zur Untersuchung vor dem Objektiv 3 des Mikroskops 1 angeordnet. Ohne Beschränkung auf das dargestellte Beispiel kann ein dichroitischer Spiegel 9 vorgesehen sein, um den Laserstrahl 7 in den Strahlengang des Mikroskops einzukoppeln oder allgemeiner, um Fluoreszenzlicht und Laserlicht im Strahlengang des Mikroskops räumlich zu trennen. Das Objektiv 3 des Mikroskops 1 erzeugt ein vergrößertes, beziehungsweise mikroskopisches Bild des von der Probe 11 emittierten Fluoreszenzlichts 13, welches vom optoelektronischen Sensor 19 der Kamera 15 aufgezeichnet wird. In der dargestellten Ausführungsform weist die Kamera 15 ein eigenes, zusätzliches Objektiv 16 auf. Dies ist jedoch nicht zwingend. Das Objektiv 3 des Mikroskops 1 kann auch direkt die Probe 11 auf dem Sensor 19 abbilden.

Mit der Kamera 15 ist ein Rechner 17 zur Auswertung und/oder Darstellung von Bilddaten der Kamera 15 verbunden. Eine Datenauswertung wird erfindungsgemäß aber auch schon von der Kamera 15 selbst durchgeführt. Neben der Ausleseelektronik 21 der Kamera 15, die zum Auslesen der Signale des Sensors 19 vorzugsweise einen Analog-Digital-Konverter zur Umrechnung der Sensorsignale in Bitwerte, beziehungsweise allgemeiner in digitale Daten umfasst, weist die Kamera 15 dazu auch eine Auswerteelektronik 23 auf. Diese Auswerteelektronik 23 enthält einen oder mehrere Mikrocontroller 25. Dieser steuert das Einlesen der Bilddaten von der Ausleseelektronik 21 und errechnet genaue Ortskoordinaten von Helligkeitsmaxima. Diese Helligkeitsmaxima entstehen im Allgemeinen durch lokalisierte Fluoreszenzemitter, die bei der superauflösenden Mikroskopie insbesondere auch einzelne fluoreszierende Moleküle sein können. Deren Größe liegt also typischerweise weit unterhalb der optischen Auflösung des Mikroskops. Auf dem Sensor entsteht aus dem ursprünglichen, von der Probe emittierten, im wesentlichen punktförmigen Signal dann bestimmt durch die Punktspreizfunktion des Mikroskops eine auf mehrere Pixel verteilte Helligkeitsverteilung. Die Auswerteeinrichtung ist nun im Speziellen mittels des entsprechend programmtechnisch eingerichteten Mikrocontrollers 25 eingerichtet, die ausgelesenen Helligkeitswerte mehrerer Pixel miteinander zu verrechnen, um als Ergebnis die Ortskoordinaten der Helligkeitsmaxima zu bestimmen. Diese Bestimmung kann bei der Berücksichtigung der Helligkeiten, beziehungsweise Farbwerte mehrerer Pixel genauer sein, als der Pixelabstand oder Pitch. Diese Ortskoordinaten werden dann als Daten für die Übertragung an den Rechner 17 bereitgestellt. Kamera 15 und Rechner 17 bilden eine Bildverarbeitungsvorrichtung 18 gemäß der Erfindung. Die Kamera 15 ist allgemein vorzugsweise als Einheit ausgebildet. Dabei sind der Sensor 16, die Ausleseeinrichtung 21 und die Auswerteeinrichtung 23 mit dem Mikrocontroller 25 in einer Geräteeinheit zusammengefasst, beispielsweise können diese dazu in einem gemeinsamen Gehäuse 50 der Kamera 15 angeordnet sein.

Allgemein wird für eine Kamera eines superauflösenden Mikroskops als Mikrocontroller ein FPGA (FPGA="field programmable gate array") bevorzugt. Ein FPGA kann flexibel programmtechnisch eingerichtet werden, um individuell Routinen zur Ermittlung der Ortskoordinaten der Helligkeitsmaxima abzuarbeiten.

Die Erfindung zeichnet sich besonders auch durch zwei wesentliche funktionale Aspekte aus. Zum einen kann die sehr flexible und äußerst schnelle hardwarenahe Datenverarbeitung auf dem Microcontroller, wie etwa einem FPGA eine Echtzeitanalyse der bei diesen Verfahren anfallenden gigantischen Datenmengen ermöglichen. Bei der derzeitig verfügbaren Technik stehen 10.000 Megapixel Verarbeitungskapazität bei 1 MHz Zeilenfrequenz und/oder einer Frame-Rate größer 1000/s und/oder einem Datentransfer mit mindestens 1 Gbit/s zur Verfügung. Aufgrund der Implementierung der Algorithmen auf dem Microcontroller in der Kamera 15 wird eine maximale Flexibilität erhalten, um zu einem späteren Zeitpunkt eine inkrementelle Optimierung der Algorithmen in der Hardware zu realisieren.

Zum zweiten wird durch das Konzept der Trefferidentifikation und durch das gezielte Ausschneiden der Rohdaten, eine massive Reduzierung des Speicherbedarfs erreicht ohne einen Datenverlust zu erleiden. Dieses Vorgehen gewinnt vor dem Hintergrund der Superresolutions-Mikroskopie, bei der gigantische Datenmengen anfallen, extrem an Bedeutung. Weiterhin wird durch die Datenreduktion eine Reduzierung der Rechnerlast in der Nachverarbeitung der Daten erreicht, wodurch auch auf dem Rechner 17 eine echtzeitnahe Nachbearbeitung der Daten ermöglicht wird.

Das Fluoreszenzsignal lokalisierter Fluoreszenz-Emitter, wie etwa von Einzelmolekülen lässt sich nicht nur lateral lokalisieren. Auch eine axiale Lokalisation ist möglich, wenn im Strahlengang des Mikroskops eine zylindrische Linse eingebaut wird. Diese führt dazu, dass die im Idealfall radialsymmetrische Abbildungsfunktion in Abhängigkeit davon elliptisch verzerrt wird, ob sich das zu lokalisierende Molekül ober- oder unterhalb der durch das Objektiv definierten Fokaleben befindet. Fig. 2 zeigt schematisch eine entsprechende optische Anordnung. Das Objektiv 3 umfasst hier neben einem oder mehreren radialsymmetrisch fokussierenden optischen Elementen 26 eine Zylinderlinse 27. Die Zylinderlinse 27 bewirkt eine astigmatische Verzerrung der Abbildung des Fluoreszenzemitters 12. Die Abbildung stellt sich als Helligkeitsverteilung 30 auf dem optoelektronischen Sensor 19 dar. Die axiale Koordinate des Fluoreszenzemitters 30 korrespondiert zur Asymmetrie der Helligkeitsverteilung. Es ist allgemein nicht erheblich, wie der Astigmatismus des optischen Systems hervorgerufen wird. Deshalb kann in Verallgemeinerung einer Zylinderlinse zumindest ein astigmatisch verzerrendes optisches Element vorgesehen sein. In Weiterbildung der Erfindung ist dann dementsprechend vorgesehen, dass die Helligkeitsverteilung auf dem Sensor 19 mittels zumindest eines astigmatisch wirkenden optischen Elements im Strahlengang des Mikroskops 1 in der Sensorebene deformiert wird, wobei die Bildverarbeitungsvorrichtung 18 dazu ausgebildet ist, aus der Deformation der Helligkeitsverteilung, wiederum unter Verrechnung der Helligkeitswerte mehrerer Pixel die Ortskoordinate des Fluoreszenzemitters 12 in axialer Richtung des Mikroskops 1, beziehungsweise in Richtung entlang der optischen Achse des Mikroskops 1 zu bestimmen.

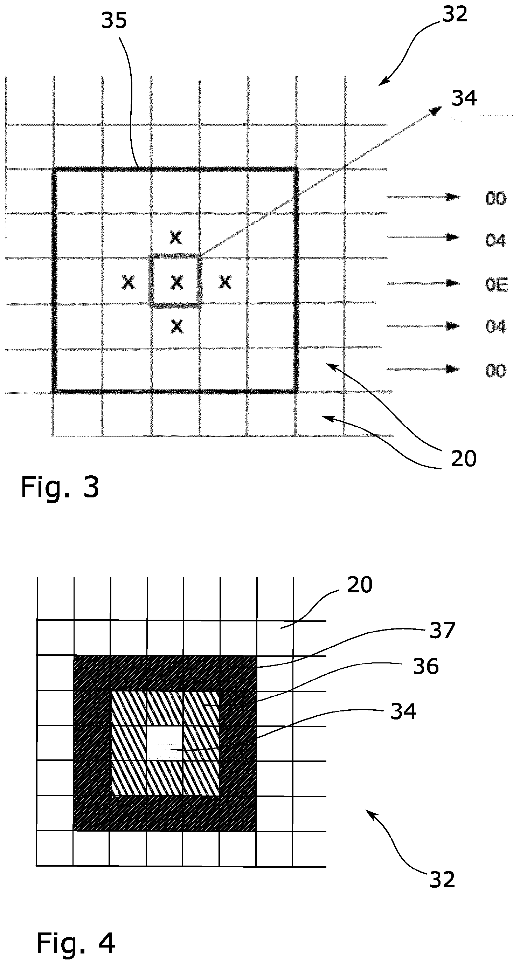

Gemäß einer bevorzugten Ausführungsform der Erfindung beinhaltet die Bildverarbeitung eine Glättung der Helligkeitswerte. Dementsprechend ist die Bildverarbeitungsvorrichtung, vorzugsweise der Mikrocontroller eingerichtet, die Helligkeitswerte mehrerer benachbarter Pixel miteinander so zu verrechnen, dass für einen Pixel ein geglätteter Helligkeitswert erhalten wird. Die geglätteten Helligkeitswerte können dann zur Weiterverarbeitung zwischengespeichert werden. Fig. 3 zeigt dazu als Ausführungsbeispiel einen Ausschnitt aus einer Matrix 32 der Helligkeitswerte. Jeder Matrixeintrag repräsentiert einen Pixel 20 des Sensors.

Um einen relevanten Pixel 34 wird gemäß einer Ausführungsform der Erfindung ein Gebiet 35 mit mehreren Pixeln gebildet, welches vorzugsweise auch den relevanten Pixel beinhaltet. Im dargestellten Beispiel ist das Gebiet eine 5×5 Submatrix, in deren Zentrum der relevante Pixel 34, also der Pixel, für den ein geglätteter Helligkeitswert errechnet werden soll, liegt. Ohne Beschränkung auf eine bestimmte Form und/oder Größe des Gebiets können gemäß einer vorteilhaften Ausgestaltung der Erfindung die Errechnung des geglätteten Helligkeitswerts des relevanten Pixels die Addition der Helligkeitswerte der Pixel des Gebiets mittels des Mikrocontrollers umfasst. Der addierte Wert ist proportional zu einem Mittelwert der Helligkeit. Es ist daher nicht unbedingt notwendig, den Mittelwert auch tatsächlich zu errechnen. Um einen Überlauf oder eine Sättigung im verwendeten Zahlenformat zu vermeiden, kann aber eine Bit-Shift-Operation im Mikrocontroller durchgeführt werden. Eine solche Operation kann um Größenordnungen schneller durchgeführt werden, verglichen mit einer Division. Dies gilt insbesondere bei einer Implementation der Bildverarbeitung in einem Mikrocontroller. Gemäß einer Weiterbildung der Erfindung ist daher die Bildverarbeitungsvorrichtung, vorzugsweise der Microcontroller eingerichtet, bei der Addition der Helligkeitswerte mehrerer Pixel mindestens eine Bit-Shift-Operation durchzuführen. Da die Differenzberechnung vorzugsweise vom Mikrocontroller durchgeführt wird, ist es zweckmäßig, in diesem Fall auch die vorgeordnete Glättung mit dem Mikrocontroller durchzuführen.

Naturgemäß weisen die Bilddaten aus einer ganzen Reihe von Gründen auch Helligkeitsschwankungen auf, die nicht auf die Fluoreszenz von Emittern in der Probe zurückzuführen sind. Um eine effektive Reduktion der Bilddaten mit einer möglichst sicheren Extraktion tatsächlicher Fluoreszenzereignisse zu erzielen, ist dazu in Weiterbildung der Erfindung vorgesehen, dass die Bildverarbeitungsvorrichtung, vorzugsweise bereits der Mikrocontroller eingerichtet ist, die Bilddaten auf Fluoreszenz-Ereignisse zu überprüfen. Die Überprüfung wird vorzugsweise an den geglätteten Bilddaten durchgeführt. Zur Überprüfung, ob bei einem Pixel ein Fluoreszenz-Ereignis vorliegt, ist die Bildverarbeitungsvorrichtung dazu eingerichtet, den Helligkeitswert des betrachteten Pixels mit Helligkeitswerten mehrerer weiterer Pixel im Umkreis des betrachteten Pixels zu vergleichen und die Position eines Fluoreszenzemitters dann zu ermitteln, wenn der Helligkeitswert des betrachteten Pixels um einen ersten vorgegebenen Betrag höher ist, als die Helligkeitswerte einer ersten Gruppe weiterer Pixel im Umkreis des betrachteten Pixels und wenn die Helligkeitswerte der ersten Gruppe weiterer Pixel um einen zweiten vorgegebenen Betrag höher ist, als die Helligkeitswerte einer zweiten Gruppe von Pixeln, wobei die Pixel so ausgewählt werden, dass die Pixel der ersten Gruppe näher am betrachteten Pixel angeordnet sind, als die Pixel der zweiten Gruppe. Eine besonders sichere Erkennung ergibt sich dabei, wenn die Pixel der Gruppen ringförmig um den betrachteten Pixel angeordnet sind. Fig. 4 zeigt hierzu als Beispiel wiederum einen Ausschnitt aus einer Matrix 32 der Helligkeitswerte. Jeder Matrixeintrag repräsentiert wie bei Fig. 3 einen Pixel 20 des Sensors.

Für den relevanten Pixel 34 soll ermittelt werden, ob bei diesem ein Fluoreszenzereignis vorliegt, also ob ein Fluoreszenzemitter innerhalb des von diesem Pixel 34 abgebildeten Bereichs der Probe liegt. Dazu werden die Helligkeiten einer ersten Gruppe 36 und einer zweiten Gruppe 37 von Pixeln mit dem Helligkeitswert des betrachteten, beziehungsweise relevanten Pixels 34 verglichen. Gemäß einer Weiterbildung der Erfindung sind wie auch im dargestellten Beispiel die Pixel 20 der ersten Gruppe direkte Nachbarn des betrachteten Pixels 34. Weiterhin können gemäß noch einer Weiterbildung dieser Ausführungsform die Pixel 20 der zweiten Gruppe 37 direkte Nachbarn der Pixel 20 der ersten Gruppe 36 sein. Anders als in der Darstellung der Fig. 4 ist es nicht unbedingt notwendig, die Helligkeitswerte aller ringförmig um den relevanten Pixel angeordneten weiteren Pixel der ersten und zweiten Gruppe 36, 37 zu verrechnen. Beispielsweise könnten die an den vier Ecken des quadratischen Rings der zweiten Gruppe angeordneten Pixel auch weggelassen werden.

Mindestens für den relevanten Pixel 34 wird vorzugsweise der geglättete Helligkeitswert verwendet. Da die Verrechnung der Helligkeitswerte der Pixel der ersten und zweiten Gruppe 36, 37 eine Mittelung mit sich bringt, können gegebenenfalls für die Helligkeitswerte hier auch die aus dem optoelektronischen Sensor 19 ausgelesenen, nicht geglätteten Werte verwendet werden.

Das vorstehend erläuterter Filterungsverfahren zur Diskriminierung von Fluoreszenzereignissen läuft nach einem Ausführungsbeispiel wie folgt ab: Ein Fluoreszenzereignis wird von der Bildverarbeitungsvorrichtung, insbesondere vom Mikrocontroller erkannt, beziehungsweise einem betrachteten Pixel 34 zugeordnet, wenn die Helligkeitsverteilung um den betrachteten Pixel 34 folgenden Bedingungen genügt:

a) der Helligkeitswert des betrachteten Pixels 34 überschreitet den mittleren Helligkeitswert (mittlere Intensität) der benachbarten Pixel (also der Pixel der Gruppe 36) um einen vorbestimmten Helligkeitswert "BlobDifMinTop", so dass gilt:

$$int(center\ pixel) > average\ int(inner\ ring) + BlobDifMinTop$$

Der Wert von BlobDifMinTop kann vom Benutzer festgelegt oder angepasst werden, da die Form und Intensität der Helligkeitsverteilung eines Ereignisses von den experimentellen Bedingungen, wie etwa der Probe oder den eingesetzten Fluoreszenzfarbstoffen abhängen kann,

b) weiterhin wird vom Mikrocontroller geprüft, ob der mittlere Helligkeitswert des inneren Rings, also der Pixel der ersten Gruppe 36 den mittleren Helligkeitswert des äußeren Rings der benachbarten Pixel der zweiten Gruppe 37 um einen vorbestimmten Wert "BiobDifMinBottom" übersteigt:

$$average\ int(inner\ ring) > average\ int(outer\ ring) + BlobDifMinBottom$$

Der Wert BlobDifMinBottom kann ebenso wie der Wert BlobDifMinTop vom Benutzer bestimmt oder angepasst werden.

Wenn ein Ereignis, also eine Fluoreszenzemission erkannt worden ist, kann dann eine Bestimmung der Ortskoordinaten des Ereignisses erfolgen.

Nachfolgend wird die in der Kamera 15 mittels des Mikrocontrollers vorgenommene Analyse der Bilddaten zur Bestimmung der Ortskoordinaten eines Fluoreszenzereignisses beschrieben. Die Analyse basiert darauf, die Koordinaten eines Helligkeitsmaximums zu bestimmen, indem diese Differenzen von Helligkeitswerten benachbarter Pixel bildet und diese Differenzen in geordneter Reihenfolge entsprechend der räumlichen Abfolge der Pixel zu verketten, wobei die Recheneinrichtung weiterhin einen Speicher mit einer darin abgelegten Tabelle mit Koordinatenwerten aufweist, wobei die Recheneinrichtung eingerichtet ist, einen Koordinatenwert aus der Tabelle anhand einer durch die verketteten Differenzwerte bestimmten Adresse auszulesen.

Gemäß einer Ausführungsform der Erfindung ist der Mikrocontroller eingerichtet, eine durch die Helligkeitswerte mehrerer Pixel gegebene Helligkeitsverteilung mit den Einträgen der Tabelle (im Folgenden auch als Lookup-Tabelle oder Umsetzungstabelle bezeichnet) zu vergleichen, wobei die Einträge der Lookup-Tabelle eine Zuordnung von Helligkeitsverteilungen zu Ortskoordinaten repräsentieren, wobei der Mikrocontroller weiterhin eingerichtet ist, bei bester Übereinstimmung einer Helligkeitsverteilung eines Eintrags in der Lookup-Tabelle mit der Helligkeitsverteilung der mehreren Pixel die Ortskoordinate des Tabelleneintrags einem Fluoreszenzereignis zuzuordnen. Es ist ebenso auch möglich, dass das Auslesen der Koordinatenwerte aus der Tabelle in einem von der Auswerteelektronik 23 getrennten Rechner 17 erfolgt. In diesem Fall können die von der Auswerteelektronik errechneten Differenzwerte oder aus den Differenzwerten bereits durch Verkettung gebildete Adressen an den Rechner 17 übertragen werden. Gemäß der bevorzugten Ausführungsform der Erfindung werden vom Mikrocontroller die Differenzwerte berechnet und an den Rechner 17 übertragen.

Diese Zuordnung kann insbesondere dadurch geschehen, indem die Ortskoordinate in einen das Fluoreszenzereignis beschreibenden Datensatz aufgenommen wird. Die Ortskoordinate kann auch durch einen Index repräsentiert werden. In diesem Fall können die Ortskoordinaten in der Lookup-Tabelle auch einfach durch die Reihenfolge der Datensätze gegeben und auslesbar sein.

Die Auswahl der Pixel erfolgt weiterhin insbesondere abhängig davon, dass einem Pixel oder einem Gebiet von Pixeln ein Fluoreszenzereignis zugeordnet wurde, dass also ein Fluoreszenzereignis in dem von einem betrachteten Pixel oder einem Gebiet mit dem Pixel abgebildeten Bereich der Probe 11 liegt.

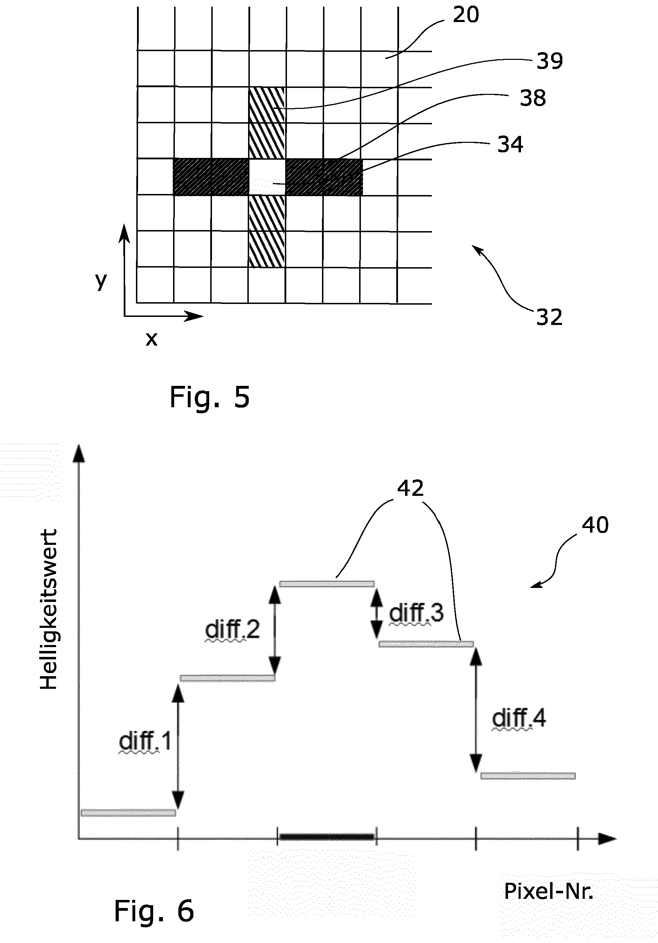

Anhand von Fig. 5 und Fig. 6 wird ein Ausführungsbeispiel der Extraktion von Ortskoordinaten mittels einer Lookup-Tabelle beschrieben. Dem betrachteten Pixel 34, beziehungsweise dem von diesem abgebildeten Bereich der Probe wurde zuvor ein Fluoreszenzereignis zugeordnet, wobei die Zuordnung vom Mikrocontroller 25 wie anhand von Fig. 4 beschrieben, vorgenommen worden sein kann.

Um zumindest eine Ortskoordinate mit hoher Auflösung zu bestimmen, werden allgemein Pixel 20 ausgewählt, deren Helligkeiten eine Helligkeitsverteilung repräsentieren. Das Maximum der Helligkeitsverteilung gibt die gesuchte Ortskoordinate an. Typischerweise soll der Ort des Fluoreszenzereignisses in zwei Richtungen mit hoher Genauigkeit bestimmt werden. Dazu werden wie in Fig. 5 gezeigt, zwei Mengen von Pixeln 20 ausgewählt, nämlich eine Reihe 38 von Pixeln in einer ersten Richtung (x-Richtung) und eine weitere Reihe von Pixeln in einer dazu nicht parallelen, vorzugsweise senkrechten Richtung (y-Richtung). Es ist günstig, wenn die Mengen wie im dargestellten Beispiel auch den relevanten Pixel 34 enthalten.

Fig. 6 zeigt die durch die Helligkeitswerte 42 der Pixel einer Reihe, beispielsweise der Reihe 38 in x-Richtung repräsentierte Helligkeitsverteilung 40. Der maximale Helligkeitswert 42 ist gemäß der zuvor durchgeführten Ereignis-Detektion gemäß Fig. 4 der Helligkeitswert des betrachteten Pixels 34.

Allgemein, ohne Beschränkung auf das dargestellte Beispiel ist es gemäß einer Weiterbildung der Erfindung günstig, wenn die Differenzen der Helligkeitswerte 42 betrachtet werden. Die

Differenzen der Helligkeitswerte 42 sind in Fig. 6 mit diff.1, diff.2, diff.3 und diff.4 bezeichnet. Diese Differenzen werden dann von der Bildverarbeitungsvorrichtung mit den Einträgen der Lookup-Tabelle verglichen.

Die Tabelle ist so geordnet, dass ein Koordinatenwert an der Tabellenposition zu finden ist, die den zu einer Adresse verketteten Differenzwerten entspricht. Sind also beispielsweise die x-Werte in Spalten und die y-Werte in Reihen in der Tabelle angeordnet und wurden in x-Richtung die Differenzwerte diff.1, diff.2, diff.3 und diff.4 ermittelt, so würde in einem Beispiel die zugehörige x-Koordinate an der Spalte mit der Nummer stehen, die den verketteten Werten diff. 1 | diff.2 | diff.3 | diff.4 entspricht. Das Auslesen von Tabelleneinträgen ist ein mit einem Rechner sehr schnell durchführbares Verfahren, ebenso die einfache Differenzbildung. Daher kann mit der Erfindung nicht nur die zu übertragende Datenmenge erheblich reduziert, sondern auch die Verarbeitung erheblich beschleunigt werden. Eine effektive Verarbeitung wird also insbesondere erzielt, wenn eine Auswerteelektronik mit einem Mikrocontroller vorgesehen wird, der die Schritte des Glättens, der Detektion von Fluoreszenzereignissen und der Bildung von Differenzen benachbarter Helligkeitswerte vornimmt. In einem praktischen Beispiel können so bei einem Mikroskopbild mit einer Größe von 2 Megapixel die zu übertragenden Daten bereits auf eine Menge in der Größenordnung von nur noch 600 Bytes reduziert werden.

Das den in der Lookup-Tabelle abgespeicherten Werten zugrundeliegende Modell der Helligkeitsverteilung kann variieren. Gemäß einer Ausführungsform der Erfindung sind die abgespeicherten Helligkeitsverteilungen in der Lookup-Tabelle nach Gauß-Verteilungen gebildet.

Generell können die Einträge der Lookup-Tabelle nach einer Ausführungsform der Erfindung benutzerseitig angepasst werden. Dazu wird gemäß einer Ausführungsform der Erfindung die Tabelle erzeugt, indem eine charakteristische Helligkeitsverteilung zugrunde gelegt und anhand der Helligkeitsverteilung für verschiedene Offsets der Verteilung die zugehörigen Differenzwerte errechnet und als Tabelleneinträge an der durch die Differenzwerte bestimmten Adressen eingetragen.

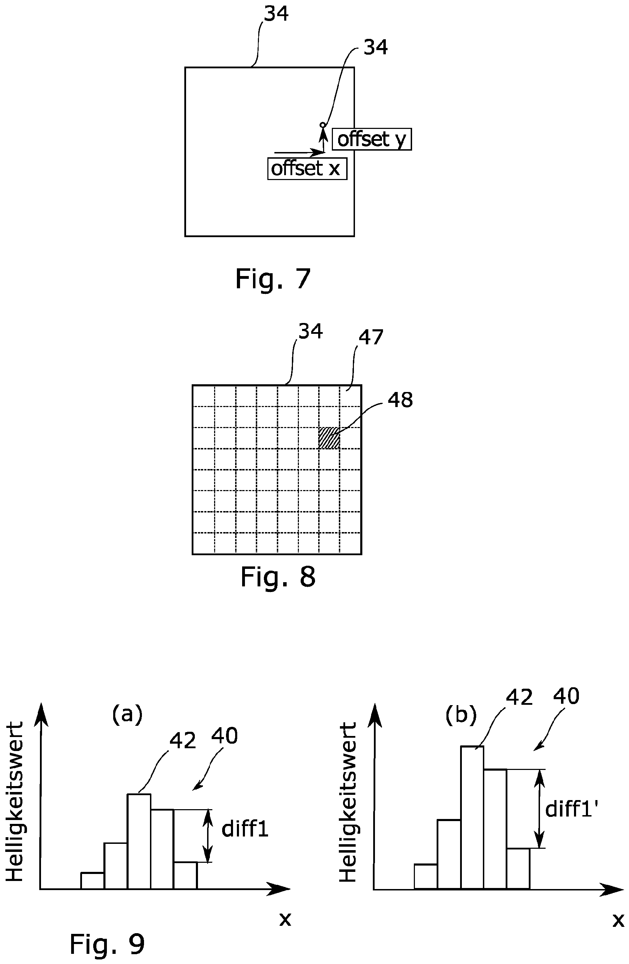

Wenn der Vergleich der Helligkeitswerte 42 mit der Lookup-Tabelle durchgeführt wurde, stehen die aus der Lookup-Tabelle ausgelesenen Ortskoordinaten zur Verfügung. Fig. 7 zeigt als

Beispiel das vom betrachteten Pixel 34 abgebildete Gebiet der Probe. Die ausgelesenen Offsets in x- und y-Richtung geben dann den Ort 45 des Fluoreszenzereignisses als Offset zur Mitte des Pixels, beziehungsweise des korrespondierenden Gebiets der Probe an. Der Offset, beziehungsweise allgemeiner die Ortskoordinate kann dabei auch in Form eines Index ausgelesen werden. Der Index gibt dann wie in Fig. 8 dargestellt die Feldposition eines Sub-Pixels 48, der dem Fluoreszenzereignis zugeordnet ist, in einem Raster aus Sub-Pixeln 45 an.

Die Ermittlung der Koordinaten anhand der Tabelle kann nach der Differenzbildung ohne weitere Bearbeitung erfolgen. Insbesondere ist eine Normierung gemäß einer Weiterbildung der Erfindung nicht notwendig. Die Differenzen sind an sich abhängig von der Lichtintensität. Zwei Fluoreszenzereignisse am gleichen Ort aber mit unterschiedlicher Intensität führen zu unterschiedlichen Differenzen, die sich um einen Helligkeitsfaktor unterscheiden. Auch die aus der Verkettung der Differenzen gebildeten Adressen sind unterschiedlich. Fig. 9 zeigt zur Verdeutlichung zwei Helligkeitsverteilungen (a), (b), die sich durch die Gesamtintensität unterscheiden. Der Übersichtlichkeit halber ist in jedem Diagramm nur eine der Differenzen diff1, beziehungsweise diff1' bezeichnet. Die Helligkeitsverteilungen 40 unterscheiden sich durch die Gesamtintensität. Im dargestellten Beispiel sind alle Helligkeiten der Helligkeitsverteilung im Diagramm (b) um einen Faktor 1,5 höher als im Diagramm (a). Folglich gilt auch für die Differenzen diff1' = 1,5 difff1. Um eine rechenaufwändige Normierung oder die Berechnungen von Verhältnissen zu vermeiden, kann anstelle dessen für jeden dieser Fälle ein separater Tabelleneintrag vorgesehen werden. Auf den ersten Blick mag dies nachteilig erscheinen, da sich die Tabelle beträchtlich vergrößert. Allerdings wird die Berechnung der Koordinatenwerte gegenüber einer Variante mit normierten Werten vereinfacht und beschleunigt. Allgemein, ohne Beschränkung auf spezielle Beispiele ist daher in einer Weiterbildung der Erfindung vorgesehen, dass die Tabelle mehrere Tabelleneinträge mit gleichen Koordinatenwerten zu unterschiedlichen Differenzwerten, also folglich auch an unterschiedlichen Positionen aufweist. Diese gleichen Koordinatenwerte können dann insbesondere zu Helligkeitsverteilungen korrespondieren, die sich in ihrer Gesamthelligkeit unterscheiden.

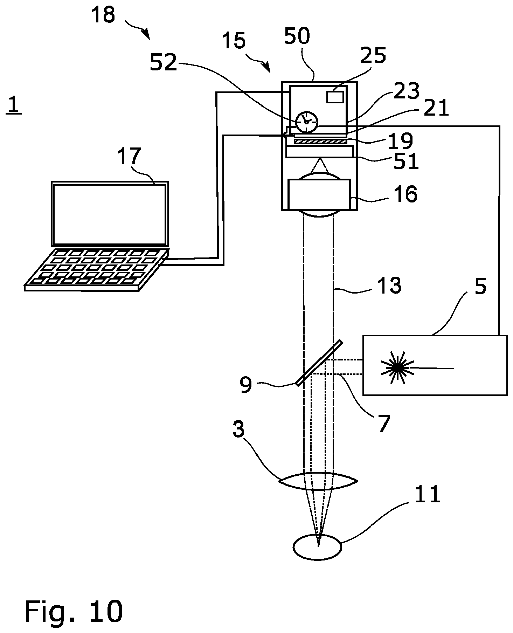

Gemäß einer Weiterbildung der Erfindung ist vorgesehen, auch die zeitliche Information der Fluoreszenzsignale auszuwerten. Ein Beispiel dazu zeigt das in Fig. 10 dargestellte Lokalisationsmikroskop. Das Ausführungsbeispiel basiert darauf, dass die Bildverarbeitungsvorrichtung 18 allgemein dazu eingerichtet ist, die Zeitdifferenz zwischen einem Laserpuls und einem Fluoreszenzsignal zu messen. Dazu ist die Bildverarbeitungseinrichtung 18 mit einer Signalleitung verbunden, die mit dem Laser 5 synchronisiert ist. Die Verbindung kann eine Triggerleitung zum Schalten des Lasers 5 sein oder ein Triggersignal für den Laser abgreifen. Ebenso kann die Verbindung auch ein Signal eines Photodetektors führen, welcher das Laserlicht empfängt. Weiterhin umfasst die Kamera 15 einen Bildverstärker 51. Der Bildverstärker 51 wandelt das Fluoreszenzlicht in eine Elektronenkaskade, die auf einem Schirm in ein optisches Signal konvertiert wird, welches wiederum vom optoelektronischen Sensor 19 erfasst wird. Vom Bildverstärker 51 kann ein durch die Elektronenkaskade verursachtes elektrisches Signal abgegriffen werden. Die Bildverarbeitungsvorrichtung 18 weist nun eine Zeitmesseinrichtung 52 auf, welche die Zeitdifferenz zwischen den beiden Signalen, also dem mit der Lichtabgabe des Lasers 5 korrelierten Signal und dem Signal des Bildverstärkers 51 misst. Mit einer solchen Messung können Fluoreszenzsignale zeitlich mit den anregenden Laserpulsen korreliert werden, um beispielsweise charakteristische Fluoreszenz-Lebensdauern zu ermitteln. Besonders bevorzugt ist die Zeitmesseinrichtung 52 wie dargestellt Bestandteil einer vom Rechner 17 getrennten Auswerteelektronik 23.

Allgemein, ohne Beschränkung auf das spezielle dargestellte Beispiel ist in Weiterbildung der Erfindung also vorgesehen, dass die Bildverarbeitungsvorrichtung eine Zeitmessvorrichtung 52 aufweist, welche eingerichtet ist, Zeitdifferenzen zwischen den Zeitpunkten von Lichtpulsen einer Anregungslichtquelle und Signalen von Elektronenkaskaden eines Bildverstärkers 51 in der Kamera 15 des Mikroskops 1 zu erfassen.

Die Zeitmesseinrichtung 51 kann beispielsweise einen Zeit-Digital-Wandler umfassen.

Die Zeitsignale können dann auch gegebenenfalls mit Bilddaten, also erfindungsgemäß detektierten Helligkeitsmaxima im Mikroskopbild korreliert werden.

Bezugszeichenliste

1    Superauflösendes Mikroskop
3    Objektiv von 1
5    Laser
7    Laserstrahl

| 9 | dichroitischer Spiegel |
|---|---|
| 11 | Probe |
| 12 | Fluoreszenzemitter |
| 13 | Fluoreszenzlicht |
| 15 | Kamera |
| 16 | Objektiv von 15 |
| 17 | Rechner |
| 18 | Bildverarbeitungsvorrichtung |
| 19 | Sensor von 15 |
| 20 | Pixel |
| 21 | Ausleseelektronik |
| 23 | Auswerteelektronik |
| 25 | Mikrocontroller |
| 26 | radialsymmetrisch fokussierendes optisches Element |
| 27 | Zylinderlinse |
| 30 | Helligkeitsverteilung auf 19 |
| 32 | Matrix der Helligkeitswerte |
| 34 | relevanter Pixel |
| 35 | Gebiet um 34 |
| 36 | erste Gruppe von Pixeln 20 |
| 37 | zweite Gruppe von Pixeln 20 |
| 38 | Reihe von Pixeln in x-Richtung |
| 39 | Reihe von Pixeln in y-Richtung |
| 40 | Helligkeitsverteilung |
| 42 | Helligkeitswert |
| 45 | Ort eines Fluoreszenzereignisses |
| 47 | Sub-Pixel |
| 48 | zu 45 zugeordnetes Sub-Pixel |
| 50 | Gehäuse von 15 |
| 51 | Bildverstärker |
| 52 | Zeitmesseinrichtung |

## Patentansprüche

1. Bildverarbeitungsvorrichtung (18), für die Bilddaten eines superauflösenden Mikroskops (1), welche eine Recheneinrichtung zur Verarbeitung der von einem optoelektronischen Sensor (19) ausgelesenen Bilddaten aufweist, die eingerichtet ist, Koordinaten der Maxima von Helligkeitsverteilungen in den Bilddaten mit einer Genauigkeit zu bestimmen, die höher als der Pixelabstand ist, **dadurch gekennzeichnet, dass** die Recheneinrichtung eingerichtet ist, die Koordinaten eines Helligkeitsmaximas zu bestimmen, indem diese Differenzen (diff.1, diff.2, diff.3, diff.4) von Helligkeitswerten (42) benachbarter Pixel bildet und diese Differenzen in geordneter Reihenfolge entsprechend der räumlichen Abfolge der Pixel zu einer Adresse verkettet, wobei die Recheneinrichtung weiterhin einen Speicher mit einer darin abgelegten Tabelle mit Koordinatenwerten aufweist, wobei die Recheneinrichtung eingerichtet ist, einen Koordinatenwert aus der Tabelle anhand der durch die verketteten Differenzwerte bestimmten Adresse auszulesen.

2. Bildverarbeitungsvorrichtung gemäß dem vorstehenden Anspruch, **dadurch gekennzeichnet, dass** der Speicher eine zweidimensionale Tabelle enthält, wobei die Bildverarbeitungsvorrichtung dazu eingerichtet ist, Differenzen von Helligkeitswerten entlang zweier unterschiedlicher Richtungen zu bilden, für jede Richtung die Differenzen zu einer Adresse zu verketten und aus der Tabelle die Koordinaten der Raumrichtungen an der durch die beiden Adressen bestimmten Position auszulesen.

3. Bildverarbeitungsvorrichtung gemäß einem der vorstehenden Ansprüche, **dadurch gekennzeichnet, dass** die Bildverarbeitungsvorrichtung eine Auswerteelektronik (23) mit zumindest einem Mikrocontroller (25) umfasst, welcher eingerichtet ist, zumindest die Berechnung der Differenzen von Helligkeitswerten benachbarter Pixel durchzuführen.

4. Bildverarbeitungsvorrichtung gemäß dem vorstehenden Anspruch, **dadurch gekennzeichnet, dass** die Bildverarbeitungsvorrichtung neben der Auswerteelektronik (23) einen Rechner (17) umfasst und die Auswerteelektronik (23) in einer Kamera (15) integriert ist, die an den Rechner (17)zur Übertragung der Daten der Auswerteelektronik (23) angeschlossen ist.

5. Bildverarbeitungsvorrichtung gemäß einem der vorstehenden Ansprüche, **dadurch gekennzeichnet, dass** der Mikrocontroller (25) einen FPGA umfasst.

6. Bildverarbeitungsvorrichtung gemäß einem der vorstehenden Ansprüche, **dadurch gekennzeichnet, dass** die Bildverarbeitungsvorrichtung eingerichtet ist, die Helligkeitswerte mehrerer benachbarter Pixel (20) miteinander so zu verrechnen, dass für einen Pixel (34) ein geglätteter Helligkeitswert erhalten wird.

7. Bildverarbeitungsvorrichtung gemäß einem der vorstehenden Ansprüche, **dadurch gekennzeichnet, dass** der Mikrocontroller (25) eingerichtet ist, die Bilddaten auf Fluoreszenz-Ereignisse zu überprüfen, indem dieser den Helligkeitswert eines betrachteten Pixels mit Helligkeitswerten mehrerer weiterer Pixel im Umkreis des betrachteten Pixels zu vergleichen und die Position eines Fluoreszenzemitters dann zu ermitteln, wenn der Helligkeitswert des betrachteten Pixels um einen ersten vorgegebenen Betrag höher ist, als die Helligkeitswerte einer ersten Gruppe von Pixeln im Umkreis des betrachteten Pixels und wenn die Helligkeitswerte der ersten Gruppe von Pixeln um einen zweiten vorgegebenen Betrag höher ist, als die Helligkeitswerte einer zweiten Gruppe von Pixeln, wobei die Pixel so ausgewählt werden, dass die Pixel der ersten Gruppe näher am betrachteten Pixel angeordnet sind, als die Pixel der zweiten Gruppe.

8. Bildverarbeitungsvorrichtung gemäß einem der vorstehenden Ansprüche, **dadurch gekennzeichnet, dass** die Tabelle mehrere Tabelleneinträge mit gleichen Koordinatenwerten zu unterschiedlichen Differenzwerten aufweist.

9. Superauflösendes Mikroskop (1), mit

- einer Anregungsquelle zur Anregung von Fluoreszenzlicht in einer mit dem Mikroskop (1) zu untersuchenden und vor einem Objektiv (3) des Mikroskops (1) angeordneten Probe (11),
- einer Kamera (15) mit einem optoelektronischen Sensor (19) zur Aufzeichnung des mikroskopischen Bilds des durch Fluoreszenzanregung von der Probe emittierten Lichts, und
- eine Bildverarbeitungsvorrichtung gemäß einem der vorstehenden Ansprüche, welche mit dem Sensor verbunden ist, um aus dem Sensor ausgelesene Bilddaten zu verarbeiten und die Koordinaten von Helligkeitsmaxima zu bestimmen.

10. Superauflösendes Mikroskop (1) gemäß dem vorstehenden Anspruch, **gekennzeichnet durch** zumindest ein astigmatisch wirkendes optisches Element im Strahlengang des Mikroskops (1), welches die Helligkeitsverteilung auf dem Sensor (19) deformiert, wobei die Bildverarbeitungsvorrichtung (18) dazu ausgebildet ist, aus der Deformation der Helligkeitsverteilung unter Verrechnung der Helligkeitswerte mehrerer Pixel die Ortskoordinate des Fluoreszenzemitters (12) in axialer Richtung des Mikroskops (1) zu bestimmen.

11. Superauflösendes Mikroskop gemäß einem der zwei vorstehenden Ansprüche, **dadurch gekennzeichnet, dass** die Bildverarbeitungsvorrichtung (18) eine Zeitmessvorrichtung (52) aufweist, welche eingerichtet ist, Zeitdifferenzen zwischen den Zeitpunkten von Lichtpulsen einer Anregungslichtquelle und Signalen von Elektronenkaskaden eines Bildverstärkers (51) in der Kamera (15) des Mikroskops (1) zu erfassen.

12. Verfahren zur Bildverarbeitung, für die Bilddaten eines superauflösenden Mikroskops (1) bei welchem von mindestens einem optoelektronischen Sensor (19) Bilddaten ausgelesen werden und mit einer Recheneinrichtung zur Verarbeitung der Bilddaten Koordinaten der Maxima von Helligkeitsverteilungen in den Bilddaten mit einer Genauigkeit bestimmt werden, die höher als der Pixelabstand ist, **dadurch gekennzeichnet, dass** die Recheneinrichtung die Koordinaten eines Helligkeitsmaximas bestimmt, indem diese Differenzen (diff.1, diff.2, diff.3, diff.4) von Helligkeitswerten (42) benachbarter Pixel bildet und diese Differenzen in geordneter Reihenfolge entsprechend der räumlichen Abfolge der Pixel zu einer Adresse verkettet, wobei die Recheneinrichtung in einem Speicher eine Tabelle mit Koordinatenwerten speichert und einen Koordinatenwert aus der Tabelle anhand der durch die verketteten Differenzwerte bestimmten Adresse ausliest.

13. Verfahren gemäß dem vorstehenden Anspruch, **dadurch gekennzeichnet, dass** die Bildverarbeitungsvorrichtung die Helligkeitswerte mehrerer Pixel des Sensors (19) verrechnet, so dass eine Glättung des Helligkeitswerts eines Pixels (34) erhalten wird.

**14.** Verfahren gemäß dem vorstehenden Anspruch, **dadurch gekennzeichnet, dass** die Errechnung des geglätteten Helligkeitswerts eines Pixels (34) die Addition der Helligkeitswerte der Pixel (20) eines Gebiets (35) mit mehreren Pixeln (20) umfasst.

**15.** Verfahren gemäß dem vorstehenden Anspruch, **dadurch gekennzeichnet**, das die Bildverarbeitungsvorrichtung bei der Addition der Helligkeitswerte mehrerer Pixel mindestens eine Bit-Shift-Operation durchführt.

**16.** Verfahren gemäß einem der vorstehenden Ansprüche, **dadurch gekennzeichnet, dass** die Tabelle erzeugt wird, indem eine charakteristische Helligkeitsverteilung zugrundegelegt und anhand der Helligkeitsverteilung für verschiedene Offsets der Helligkeitsverteilung die zugehörigen Differenzwerte errechnet und als Tabelleneinträge an der durch die Differenzwerte bestimmten Adressen eingetragen werden.

**Claims**

**1.** An image processing apparatus (18) for image data of a super high resolution microscope (1), comprising a computing device for processing the image data read out by an optoelectronic sensor (19), adapted to determine coordinates of brightness distribution maxima in the image data with an accuracy higher than the pixel pitch; **characterised in that** the computing device is adapted to determine the coordinates of a brightness maximum by calculating differences (diff.1, diff.2, diff.3, diff.4) of brightness values (42) of adjacent pixels and concatenating these differences in an ordered sequence corresponding to the spatial sequence of the pixels to form an address, wherein the computing device furthermore comprises a memory with a table stored therein and containing coordinate values, wherein the computing device is adapted to read out a coordinate value from the table using the address defined by the concatenated difference values.

**2.** The image processing apparatus according to the preceding claim, **characterised in that** the memory contains a two-dimensional table, wherein the image processing apparatus is adapted to calculate differences of brightness values along two different directions, to concatenate the differences to form an address for each direction, and to read out, from the table, the coordinates of the spatial directions at the position determined by the two addresses.

**3.** The image processing apparatus according to any one of the preceding claims, **characterised in that** the image processing apparatus comprises evaluation electronics (23) including at least one microcontroller (25) which is adapted to execute at least the calculation of the differences of brightness values of adjacent pixels.

**4.** The image processing apparatus according to the preceding claim, **characterised in that** the image processing apparatus comprises a computer (17) in addition to the evaluation electronics (23), and that the evaluation electronics (23) are integrated in a camera (15) which is connected to the computer (17) for transferring the data from the evaluation electronics (23).

**5.** The image processing apparatus according to any one of the preceding claims, **characterised in that** the microcontroller (25) comprises an FPGA.

**6.** The image processing apparatus according to any one of the preceding claims, **characterised in that** the image processing apparatus is adapted to include the brightness values of a plurality of adjacent pixels (20) in the calculation such that a smoothed brightness value is obtained for a pixel (34).

**7.** The image processing apparatus according to any one of the preceding claims, **characterised in that** the microcontroller (25) is adapted to check the image data for fluorescence events by comparing the brightness value of a pixel under consideration with brightness values of a plurality of further pixels in the vicinity of the pixel under consideration and then to determine the position of a fluorescence emitter if the brightness value of the pixel under consideration is higher by a first predefined amount than the brightness values of a first group of pixels in the vicinity of the pixel under consideration and if the brightness values of the first group of pixels are higher by a second predefined amount than the brightness values of a second group of pixels, wherein the pixels are selected such that the pixels of the first group are located closer to the pixel under consideration than the pixels of the second group.

**8.** The image processing apparatus according to any one of the preceding claims, **characterised in that** the table includes a plurality of table entries with the same coordinate values for different difference values.

**9.** A super high resolution microscope (1), comprising

    - an excitation source for exciting fluorescent light in a sample (11) to be examined using the microscope (1) and arranged in front of an objective lens (3) of the microscope (1);
    - a camera (15) with an optoelectronic sensor (19) for capturing the microscopic image of the light emitted from the sample due to fluorescence excitation; and
    - an image processing apparatus according to any one of the preceding claims, which is connected to the sensor in order to process image data read out from the sensor and to determine the coordinates of brightness maxima.

**10.** The super high resolution microscope (1) according to the preceding claim, **characterised by** at least one astigmatic optical element in the beam path of the microscope (1), which deforms the brightness distribution on the sensor (19), wherein the image processing apparatus (18) is adapted to determine the spatial coordinate of the fluorescence emitter (12) in the axial direction of the microscope (1) on the basis of the deformation of the brightness distribution while including the brightness values of a plurality of pixels in the calculation.

**11.** The super high resolution microscope according to any one of the two preceding claims, **characterised in that** the image processing apparatus (18) comprises a time measuring device (52) which is adapted to measure time differences between the points in time of light pulses from an excitation light source and signals of electron cascades from an image intensifier (51) in the camera (15) of the microscope (1).

**12.** A method for image processing for the image data of a super high resolution microscope (1), in which image data from at least one optoelectronic sensor (19) are read out and coordinates of the maxima of brightness distributions in the image data are determined with a precision that is higher than the pixel pitch using a computing device for processing the image data; **characterised in that** the computing device determines the coordinates of a brightness maximum by calculating differences (diff.1, diff.2, diff.3, diff.4) of brightness values (42) of adjacent pixels and concatenating these differences in an ordered sequence corresponding to the spatial sequence of the pixels to form an address, wherein the computing device stores a table containing coordinate values in a memory thereof, and reads out a coordinate value from the table using the address defined by the concatenated difference values.

**13.** The method according to the preceding claim, **characterised in that** the image processing apparatus includes the brightness values of a plurality of pixels of the sensor (19) in the calculation, such that the brightness value of a pixel (34) is smoothed.

**14.** The method according to the preceding claim, **characterised in that** the calculation of the smoothed brightness value of a pixel (34) involves adding up the brightness values of the pixels (20) of an area (35) that includes a plurality of pixels (20).

**15.** The method according to the preceding claim, **characterised in that** the image processing apparatus carries out at least one bit shift operation when adding up the brightness values of a plurality of pixels.

**16.** The method according to any one of the preceding claims, **characterised in that** the table is generated by taking a characteristic brightness distribution as a basis and using the brightness distribution for different offsets of the brightness distribution to calculate the associated difference values and entering them as table entries at the addresses determined by the difference values.

**Revendications**

**1.** Dispositif de traitement d'images (18) pour les données d'images d'un microscope à super-résolution (1), lequel dispositif présente un système de calcul qui est destiné au traitement des données d'images lues par un capteur optoélectronique (19) et est conçu pour déterminer des coordonnées des maximums de la distribution de la luminosité dans les données d'images, avec une précision qui est supérieure à l'espacement des pixels, **caractérisé en ce que** le système de calcul est conçu pour déterminer les coordonnées d'un maximum de luminosité en formant des différences (diff.1, diff.2, diff.3, diff.4) de valeurs de luminosité (42) de pixels voisins et en concaténant ces différences pour former une adresse, dans une suite ordonnée en fonction de la succession des pixels dans l'espace, le système de calcul présentant en outre une mémoire dans laquelle est déposé un tableau avec des valeurs de coordonnées, le système de calcul étant conçu pour lire une valeur de coordonnée dans le tableau, à l'aide de l'adresse définie par les valeurs de différence concaténées.

**2.** Dispositif de traitement d'images selon la revendication précédente, **caractérisé en ce que** la mémoire contient un tableau en deux dimensions, le dispositif de traitement d'images étant conçu pour former des différences de valeurs de luminosité le long de deux directions différentes, pour concaténer les différences pour chaque direction en vue de former une adresse, et pour lire dans le tableau les coordonnées des directions dans l'espace, à la position définie par les deux adresses.

**3.** Dispositif de traitement d'images selon l'une des revendications précédentes, **caractérisé en ce que** le dispositif de traitement d'images comprend un système électronique d'évaluation (23) comportant au moins un microcontrôleur (25) qui est conçu pour réaliser au moins le calcul des différences entre les valeurs de luminosité de pixels voisins.

**4.** Dispositif de traitement d'images selon la revendication précédente, **caractérisé en ce qu'**en dehors du système électronique d'évaluation (23), le dispositif de traitement d'images comprend un ordinateur (17), et le système électronique d'évaluation (23) est intégré dans une caméra (15) qui est connectée à l'ordinateur (17) en vue de la transmission des données du système électronique d'évaluation (23).

**5.** Dispositif de traitement d'images selon l'une des revendications précédentes, **caractérisé en ce que** le microcontrôleur (25) comprend un FPGA.

**6.** Dispositif de traitement d'images selon l'une des revendications précédentes, **caractérisé en ce que** le dispositif de traitement d'images est conçu pour calculer les unes avec les autres les valeurs de luminosité de plusieurs pixels (20) voisins, de manière à obtenir une valeur de luminosité lissée pour un pixel (34).

**7.** Dispositif de traitement d'images selon l'une des revendications précédentes, **caractérisé en ce que** le microcontrôleur (25) est conçu pour vérifier les données d'images en vue de détecter des événements de fluorescence, par le fait que ledit microcontrôleur compare la valeur de luminosité d'un pixel considéré avec des valeurs de luminosité de plusieurs autres pixels situés autour du pixel considéré et détermine la position d'un émetteur de fluorescence lorsque la valeur de luminosité du pixel considéré est supérieure d'une première valeur prédéfinie aux valeurs de luminosité d'un premier groupe de pixels situés autour du pixel considéré, et lorsque les valeurs de luminosité du premier groupe de pixels sont supérieures d'une deuxième valeur prédéfinie aux valeurs de luminosité d'un deuxième groupe de pixels, les pixels étant sélectionnés de manière à ce que les pixels du premier groupe soient plus proches du pixel considéré que les pixels du deuxième groupe.

**8.** Dispositif de traitement d'images selon l'une des revendications précédentes, **caractérisé en ce que** le tableau présente plusieurs entrées avec des valeurs de coordonnées identiques pour des valeurs de différence différentes.

**9.** Microscope à super-résolution (1), comprenant

   - une source d'excitation destinée l'excitation de lumière fluorescente dans un échantillon (11) devant être examiné avec le microscope (1) et placé devant un objectif (3) du microscope (1),
   - une caméra (15) dotée d'un capteur optoélectronique (19) en vue de l'enregistrement de l'image microscopique de la lumière émise par l'échantillon par excitation de fluorescence, et
   - un dispositif de traitement d'images selon l'une des revendications précédentes, qui est relié au capteur aux fins de traiter des données d'images extraites du capteur et de déterminer les coordonnées de maximums de luminosité.

**10.** Microscope à super-résolution (1) selon la revendication précédente, **caractérisé en ce qu'**il comporte au moins un élément optique à action astigmatique qui est placé dans le trajet du faisceau du microscope (1) et déforme la distribution de luminosité sur le capteur (19), le dispositif de traitement d'images (18) étant conçu pour déterminer la coordonnée locale de l'émetteur de fluorescence (12) dans la direction axiale du microscope (1), à partir de la déformation de la distribution de luminosité, en prenant en compte les valeurs de luminosité de plusieurs pixels.

**11.** Microscope à super-résolution selon l'une des deux revendications précédentes, **caractérisé en ce que** le dispositif de traitement d'images (18) présente un dispositif de mesure du temps (52) qui est conçu pour mesurer des différences de temps entre les instants d'impulsions lumineuses d'une source lumineuse d'excitation et des signaux de cascades d'électrons d'un intensificateur d'image (51) dans la caméra (15) du microscope (1).

**12.** Procédé de traitement d'images pour les données d'images d'un microscope à super-résolution (1), selon lequel au moins un capteur optoélectronique (19) lit des données d'images, et un système de calcul, destiné au traitement des données d'images, détermine des coordonnées des maximums de distributions de luminosité dans les données d'images, avec une précision qui est supérieure à l'espacement des pixels, **caractérisé en ce que** le système de calcul détermine les coordonnées d'un maximum de luminosité, en formant des différences (diff.1, diff.2, diff.3, diff.4) de valeurs de luminosité (42) de pixels voisins et en concaténant ces différences pour former une adresse, dans une suite ordonnée en fonction de la succession des pixels dans l'espace, le système de calcul enregistrant dans une mémoire un tableau avec des valeurs de coordonnées et lisant une valeur de coordonnée dans le tableau, à l'aide de l'adresse définie par les valeurs de différence concaténées.

**13.** Procédé selon la revendication précédente, **caractérisé en ce que** le dispositif de traitement d'images prend en compte les valeurs de luminosité de plusieurs pixels du capteur (19), de manière à obtenir un lissage de la valeur de luminosité d'un pixel (34).

**14.** Procédé selon la revendication précédente, **caractérisé en ce que** le calcul de la valeur de luminosité lissée d'un pixel (34) comprend l'addition des valeurs de luminosité des pixels (20) d'une zone (35) comportant plusieurs pixels (20).

**15.** Procédé selon la revendication précédente, **caractérisé en ce que** lors de l'addition des valeurs de luminosité de plusieurs pixels, le dispositif de traitement d'images réalise au moins une opération de décalage de bits.

**16.** Procédé selon l'une des revendications précédentes, **caractérisé en ce que** le tableau est généré en se basant sur une distribution de luminosité caractéristique et en calculant les valeurs de différence associées, à l'aide de la distribution de luminosité pour différents décalages de la distribution de luminosité, et en les inscrivant en tant qu'entrées de tableau à l'adresse déterminée par les valeurs de différence.

Fig. 1

Fig. 2

Fig. 3

Fig. 4

## Fig. 5

## Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018091704 A1

- EP 2752699 A1

**In der Beschreibung aufgeführte Nicht-Patentliteratur**

- **ALEX SMALL et al.** Fluorophore localization algorithms for super-resolution microscopy. *Nature Methods,* 27. Februar 2014, vol. 11 (3), 267-279

- **JOHANN G. DANZL et al.** Coordinate-targeted fluorescence nanoscopy with multiple off states. *Nature Photonics,* 18. Januar 2016, vol. 10 (2), 122-128